Europäisches Patentamt

European Patent Office

Office européen des brevets

(19)

(11) Numéro de publication : **0 299 869 B1**

(12) **FASCICULE DE BREVET EUROPEEN**

(45) Date de publication du fascicule du brevet :
27.12.91 Bulletin 91/52

(51) Int. Cl.⁵ : **C03B 23/03, C03B 23/025,**
**C03B 23/035, C03B 35/16,**
**C03B 35/24**

(21) Numéro de dépôt : **88401825.0**

(22) Date de dépôt : **13.07.88**

(54) **Bombage de plaques de verre.**

(30) Priorité : 15.07.87 FR 8709916

(43) Date de publication de la demande :
18.01.89 Bulletin 89/03

(45) Mention de la délivrance du brevet :
27.12.91 Bulletin 91/52

(84) Etats contractants désignés :
BE CH DE ES FR GB IT LI LU NL SE

(56) Documents cités :
DE-A- 2 400 296
US-A- 3 391 805
US-A- 3 468 645
US-A- 3 869 271
US-A- 4 252 552

(73) Titulaire : **SAINT-GOBAIN VITRAGE**
**INTERNATIONAL**
**18, avenue d'Alsace**
**F-92400 Courbevoie (FR)**

(72) Inventeur : **Orain, Roger**
**La lisière du Golf 2, rue du Colonel de**
**Rochebrune**
**F-92380 Garches (FR)**

(74) Mandataire : **Leconte, Jean-Gérard et al**
**SAINT-GOBAIN RECHERCHE 39, Quai Lucien**
**Lefranc**
**F-93300 Aubervilliers (FR)**

# Description

La présente invention concerne le bombage, éventuellement suivi de trempe, de plaques de verre.

L'industrie automobile a de plus en plus d'exigences sur la qualité des vitrages qui lui sont fournis.

En particulier, en plus de la qualité optique, de la précision dimensionnelle, elle exige une très grande précision sur le galbe des vitrages et elle réclame des formes nouvelles.

Dans les procédés de bombage jusqu'alors utilisés, par exemple du type de celui décrit dans le document de brevet européen 3391, on prend en charge une plaque de verre plane, arrivant sur un convoyeur après avoir été portée à haute température, à l'aide d'un dispositif de préhension à dépression agissant sur la face supérieure de la plaque de verre, on soulève ladite plaque de verre pour laisser entrer sous elle un cadre de bombage à profil courbe, ouvert en son centre, à concavité tournée vers le haut, puis on la repose ou on la laisse tomber sur le cadre de bombage, sur lequel elle s'affaisse sous l'effet de son propre poids, pour en épouser la forme.

Le profil de la plaque de verre ainsi bombée correspond alors assez bien, sur ses bords, au profil souhaité du fait que la plaque s'est affaissée jusqu'à reposer par ses bords sur le cadre, mais la courbure de la plaque en son centre est difficilement maitrisable. Si le temps d'affaissement est trop long, et/ou si la température du verre est un peu trop élevée, il en résulte un excès d'affaissement au centre de la plaque de verre, d'où un profil de courbure au centre trop accentué et vice versa si la température est trop faible et/ou le temps d'affaissement trop court.

En outre, le cadre de bombage peut marquer légèrement le verre et être à l'origine d'un léger méplat sur la bordure de la plaque de verre.

Par ailleurs, certaines courbures ne sont pas accessibles par les procédés de ce type, en particulier celles trop accentuées à proximité du bord des plaques de verre, ou celles devant affecter des portions étroites et/ou anguleuses des plaques de verre.

En outre encore, l'industrie automobile demande de plus en plus fréquemment des vitrages porteurs de dépôts d'émail, par exemple en étroites bandes périphériques, notamment pour masquer la colle qui servira à fixer lesdits vitrages dans les baies des carrosseries d'automobiles, en réseaux couvrant toute la surface pour constituer des écrans vis-à-vis du soleil, ou encore en bandes ou en motifs divers pour servir d'éléments décoratifs. Ces dépôts d'émail ajoutent une difficulté supplémentaire à la fabrication des vitrages, à leur manipulation et à leur travail en général, du fait de la fragilité de l'émail, de sa consistance encore liquide ou pâteuse au début de l'opération de bombage.

Dans le procédé de bombage évoqué précédemment, la face de la plaque de verre qui porte l'émail est dirigée vers le haut pour éviter notamment de s'abimer sur les rouleaux du convoyeur de transport et elle vient donc en contact avec le dispositif de préhension, d'où des précautions à prendre pour éviter de marquer les plaques de verre qu'on travaille par de l'émail provenant des plaques de verre précédemment traitées et qui aurait souillé le dispositif de préhension.

Il est connu du brevet US-A-3869271 un procédé de bombage dans lequel la plaque de verre amenée par un convoyeur à coussin gazeux est soulevée par une forme de bombage convexe pour être appliquée contre une forme aspirante supérieure concave. La face supérieure est ainsi plus tardivement en contact avec un outil de bombage donc risque moins de s'abimer. Néanmoins cet avantage est plus théorique que réel dans la mesure où la face émaillée est dans la majorité des cas la face concave, face tournée vers l'intérieur du véhicule donc dans le cas du brevet américain précité, la face inférieure de la plaque.

La présente invention vise à éviter les inconvénients et insuffisances des techniques de l'art antérieur, à savoir donc essentiellement imprécision de la courbure au centre des vitrages, difficulté pour atteindre certaines formes, marques et méplats sur la bordure des vitrages, difficultés pour traiter des plaques de verre porteuses de dépôts d'émail.

Elle propose pour cela un procédé de bombage de plaques de verre dans lequel chaque plaque de verre portée à haute température, arrivant à plat sur un convoyeur en y reposant par sa face inférieure, est saisie par cette face inférieure, retournée par un plateau pivotant la retenant grâce à une dépression agissant sur la face inférieure de la plaque de verre de manière à amener cette face initialement inférieure en position supérieure, puis déposée sur une forme de bombage dont elle épouse le profil.

Avantageusement cette forme de bombage est à convexité tournée vers le haut.

Dans certains cas, la plaque de verre épouse le profil de la forme de bombage sous le seul effet de la gravité, dans d'autres cas, un pressage vient aider la plaque de verre à épouser le profil de cette forme de bombage.

Dans certains cas, la plaque de verre bombée est évacuée au poste de travail suivant en étant posée sur la forme de bombage elle-même ; dans d'autres cas après pressage à l'aide d'une contreforme, ladite contreforme s'éloigne en soulevant avec elle la plaque de verre de façon à permettre l'entrée sous elle d'un cadre spécial de sortie qui reçoit ensuite la plaque de verre bombée, l'évacue du poste de bombage et la transfère au poste suivant, notamment de trempe ou de recuisson.

L'invention propose également un dispositif de bombage ayant un plateau équipé de moyens de transport escamotables ou pouvant être mis hors service, aptes à recevoir les plaques de verre à la suite du convoyeur les amenant, équipé également de moyens de maintien par dépression des plaques de verre, apte à pivoter pour retourner les plaques de verre maintenues de façon à amener la face initialement inférieure de ces plaques en position supérieure, ayant également une forme de bombage, disposée sous le plateau après qu'il ait pivoté, de façon que ledit plateau abandonnant la plaque de verre qu'il maintient, celle-ci se retrouve sur ladite forme de bombage.

Avantageusement, la forme de bombage est à convexité tournée vers le haut.

Suivant certaines formes de réalisation, le dispositif selon l'invention possède également des moyens de pressage des plaques de verre contre la forme de bombage convexe, moyens pneumatiques de pressage, ou moyens mécaniques tels une contreforme.

Dans une réalisation où les moyens de transport sont à rouleaux, le plateau du dispositif selon l'invention présente une surface dans laquelle sont ménagées des gorges parallèles, pour loger lorsqu'ils sont en position escamotée, les rouleaux des moyens de transport associés audit plateau et portés par lui, les portions de surface du plateau entre les gorges étant percées d'orifices au travers desquels, selon les phases du bombage, est appliquée la dépression ou la surpression.

Avantageusement, dans cette réalisation où les moyens de transport sont à rouleaux, le dispositif selon l'invention est équipé de moyens de verrouillage en position escamotée des rouleaux des moyens de transport associés au plateau pivotant.

Dans une autre réalisation les moyens de transport sont à coussin gazeux.

L'invention sera maintenant décrite plus en détail en référence aux figures jointes qui représentent. :
— figure 1 : une vue d'ensemble d'une installation de bombage suivant l'invention suivie d'un poste de trempe.
— figure 2 : une vue de détail du plateau pivotant de l'installation de bombage montrant plus particulièrement la structure du plateau pivotant, les rouleaux de la partie de convoyeur associée et les moyens de verrouillage des rouleaux en position escamotée.
— figure 3 : un schéma illustrant les différentes phases du procédé de bombage.

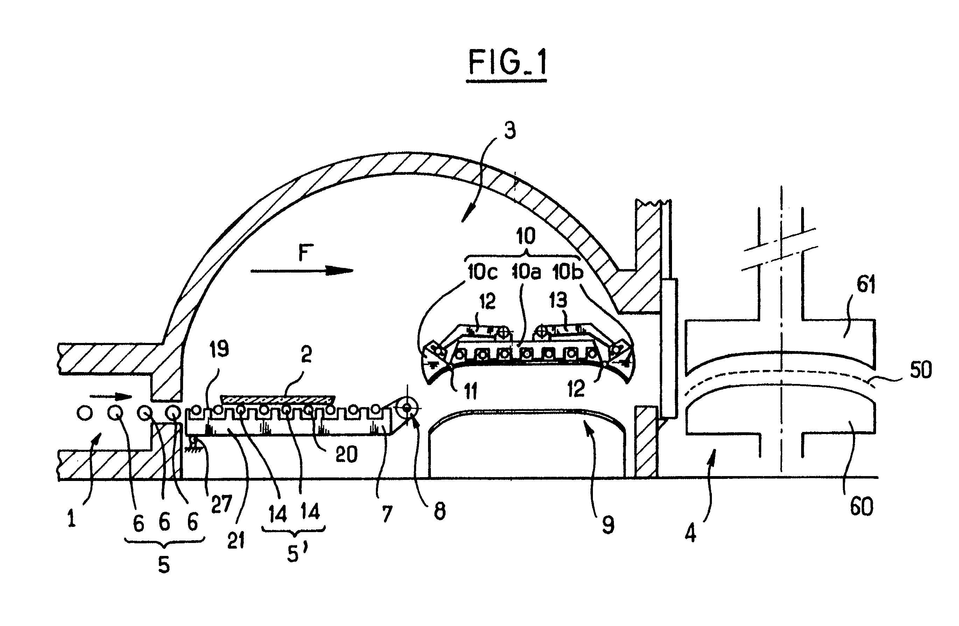

La figure 1 montre une vue d'ensemble d'une installation de bombage et de trempe ou de recuisson de plaques de verre. Elle représente un four 1 de réchauffage de plaques de verre telles que 2 à traiter, une cellule de bombage 3, un poste de trempe ou de recuisson 4. Le four 1 est traversé par un convoyeur 5, par exemple à rouleaux tels que 6, ou à coussin gazeux qui se prolonge dans la cellule de bombage 3, au même niveau, par une portion 5' portée par un plateau 7 pivotant autour d'un axe ou arbre de pivotement 8. La cellule de bombage 3 contient aussi une forme de bombage 9, à convexité tournée vers le haut et optionnellement des moyens de pressage 10 des plaques de verre 2 sur la forme de bombage convexe 9.

Cette forme de bombage 9 peut être une forme pleine ou un anneau à profil courbe convexe, apte à supporter les plaques de verre uniquement sur leur périphérie, un tel anneau étant aussi parfois appelé cadre de bombage. Eventuellement sur un tel anneau, des barrettes complémentaires transversales ou longitudinales, adaptées au profil final souhaité pour les plaques de verre, peuvent être prévues. Cette forme de bombage 9 peut en outre être percée d'orifices, au travers desquels on peut exercer une dépression notamment pour faciliter le placage des plaques de verre contre elle ou au contraire une pression positive.

Selon une variante, les orifices dans la forme de bombage 9 au travers desquels est appliquée une dépression sont remplacés ou complétés par une jupe périphérique comme décrit dans le brevet français 2 085 464 et la dépression s'exerce au travers de l'espace séparant cette jupe de la forme de bombage convexe 9. L'obtention d'une dépression à la périphérie de la forme convexe 9 grâce à une jupe n'est valable que dans le cas d'une forme 9 pleine.

Les moyens de pressage 10 peuvent être des moyens pneumatiques, c'est à dire constitués par un courant gazeux chaud dirigé verticalement du haut vers le bas contre une plaque de verre posée sur la forme de bombage convexe 9. Ce courant gazeux chaud est produit, comme décrit dans les demandes de brevet en Europe n° 85401345.5 (publiée sous le n° 0106758), par un ventilateur à flux transversal soufflant dans une enceinte dont la paroi de fermeture inférieure, en regard de la plaque de verre contre laquelle doit être dirigé le flux gazeux, présente un grand nombre d'orifices de sortie de gaz, la distance entre cette paroi de fermeture et la plaque de verre étant telle que les jets de gaz se rejoignent et se recouvrent pour former au niveau de la plaque de verre un champ d'écoulement homogène. Avantageusement, un système de recyclage du gaz soufflé et d'appoint de chaleur est prévu. De tels moyens de pressage pneumatiques ne sont pas représentés sur les figures.

Les moyens de pressage 10 peuvent être des moyens mécaniques, tels que représentés schématiquement sur la figure 1, et constitués d'une contreforme à concavité tournée vers le bas, complémentaire de la forme convexe 9.

Il peut s'agir d'une contreforme 10 en une seule pièce, ou d'une contreforme 10 en plusieurs parties, par exemple 10a, 10b, et 10c, les parties latérales 10b et 10c étant articulées autour des articulations 11 et 12 appartenant à la partie centrale 10a, en vue de permettre leur relèvement sous l'effet de vérins non figurés agissant sur les bras 12 et 13 pour faciliter l'approche et le retrait de la contreforme sans frottement sur le verre, en particulier dans le cas d'une courbure très prononcée à donner aux plaques de verre à proximité de leurs bords.

Ces moyens mécaniques de pressage 10 sont équipés d'orifices non visibles sur les figures, aptes à créer, sur leur face inférieure concave venant en contact avec les feuilles de verre, une dépression dans certaines phases du procédé de bombage, une pression lors d'autres phases. Pour cela, ils sont reliés par des cavités et des conduites non représentées à des sources de vide et/ou de gaz sous pression. Pour permettre la dépression, à la place des orifices au travers de la surface, ou en complément de ces orifices les moyens mécaniques de pressage 10, en particulier lorsqu'ils sont en une seule pièce, peuvent être équipés d'une jupe périphérique comme décrit dans le document de brevet français n° 2085464, et la dépression s'exerce alors à la périphérie de la contreforme 10, au travers de l'espace ménagé entre ladite contreforme et sa jupe associée.

L'effet de dépression au niveau de la contreforme 10 peut être complété par l'effet de pression exercé par soufflage au travers de la forme de bombage.

Suivant la courbure à donner aux plaques de verre cette contreforme 10 est pleine ou au contraire constituée d'éléments d'appui discontinus qui sont à l'aplomb des zones d'appui de la forme convexe 9 lorsque ladite forme convexe 9 est constituée par un cadre ouvert en son centre. Eventuellement, des barrettes transversales ou longitudinales complémentaires non représentées sur les figures, garnies de matériau isolant, peuvent être prévues.

Le plateau pivotant 7 est comme déjà dit, situé à l'intérieur de la cellule de bombage 3 et il porte une portion 5' de convoyeur, dans le prolongement du convoyeur 5 qui fait traverser le four de réchauffage 1 aux plaques de verre 2 et les amène au bombage.

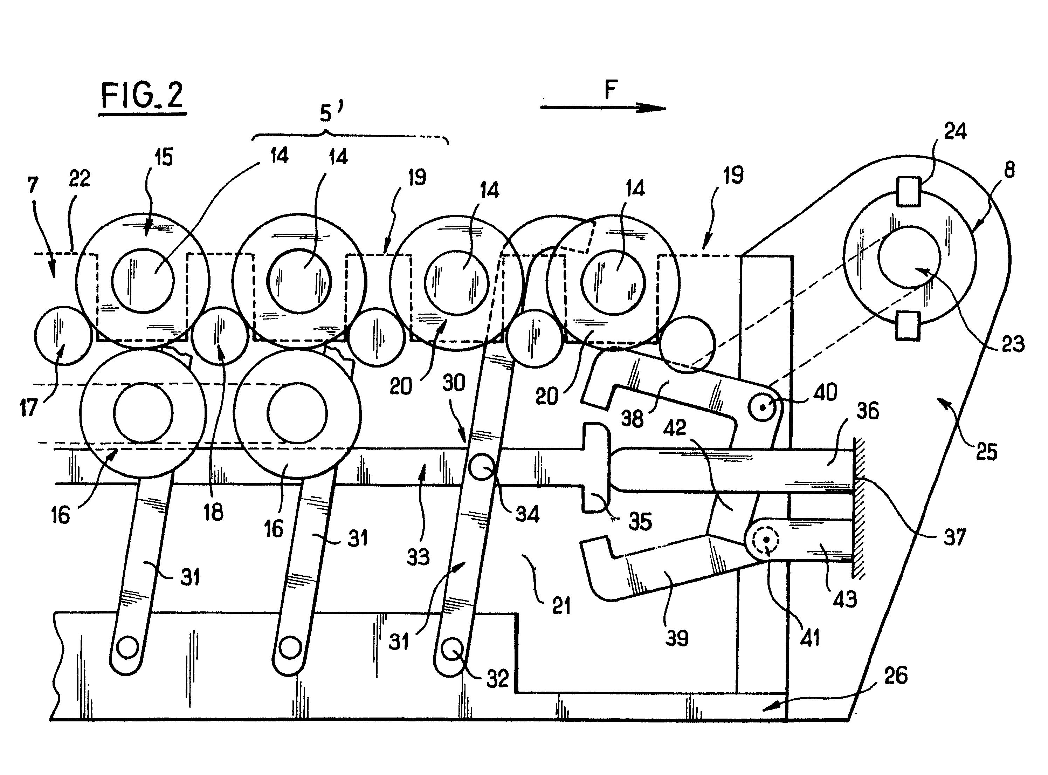

Cette fonction de convoyage de la portion 5' portée par le plateau 7 est par exemple assurée par des rouleaux 14 qui peuvent être recouverts de gaines non représentées, en fibres de verre ou de silice. Sur chaque extrêmité de rouleau 14 est claveté un galet d'appui 15 (montré figure 1 mais plus facilement visible figure 2) qui repose sur un galet d'entrainement 16, entraîné en rotation par un ensemble cinématique classique non représenté, qui compte tenu de la température élevée régnant dans la cellule de bombage 3, est avantageusement disposé hors de ladite cellule, et qui également repose sur deux galets fous de centrage 17 et 18.

L'ensemble cinématique qui agit sur les galets d'entrainement 16 situés à chaque extrêmité des rouleaux 14 et qui porte également les galets fous de centrage 17 et 18, comporte deux parties identiques situées sur chaque rive de la cellule 3, ces deux parties étant solidaires par l'intermédiaire d'une structure non représentée passant sous la cellule 3.

Cette portion 5' de convoyeur est montée escamotable en ce sens qu'elle est dans le prolongement du convoyeur 5 traversant le four de réchauffage 1 et au même niveau pour recevoir chaque nouvelle plaque de verre 2 et qu'elle s'abaisse ensuite, laissant alors reposer la plaque de verre 2 sur la surface 19 du plateau pivotant 7.

En vue de cet escamotage de la portion 5' du convoyeur à rouleaux, la surface 19 du plateau est creusée de gorges telles que 20 qui constituent des logements pour les rouleaux 14 lorsqu'ils sont en position basse escamotée.

En position active, les rouleaux 14 sont à un niveau tel que leur génératrice supérieure est située au dessus de la surface 19 du plateau 7, par exemple 5 mm au dessus, alors qu'en position de repos escamotée, la génératrice supérieure des rouleaux 14 est située à un niveau inférieur à celui de la surface 19, permettant ainsi aux plaques de verre 2 de reposer uniquement sur ladite surface 19.

Lors de l'escamotage des rouleaux 14, les galets d'entrainement 16 eux aussi sont escamotés, d'une hauteur supérieure à celle dont sont escamotés les rouleaux 14, ce qui permet donc d'interrompre leur rotation.

Pour ce faire, la structure qui porte l'ensemble cinématique comportant les galets d'entrainement 16 et les galets fous de centrage 17 et 18 peut adopter deux niveaux : un niveau haut qui est celui dans lequel la portion 5' est dans le prolongement du convoyeur 5, un niveau bas qui est celui dans lequel les rouleaux 14 de cette portion 5' sont escamotés et dans lequel une plaque de verre posée initialement sur les rouleaux 14 se retrouve en appui sur la surface 19. Pour permettre l'arrêt de l'entrainement des rouleaux 14, la profondeur des gorges 20 est inférieure à l'écart entre les deux niveaux haut et bas que peut adopter la structure, si bien que l'abaissement des galets d'entrainement 16 est plus important que celui des rouleaux 14, comme déjà dit.

Dans d'autres réalisations la fonction de convoyage de la portion 5' et éventuellement aussi de l'ensemble du convoyeur 5, est assurée par un coussin gazeux associé à un moyen d'entrainement des plaques de verre sur ce coussin gazeux, par exemple, ledit coussin gazeux étant légèrement incliné latéralement, de 5° environ, une chaîne munie de doigts de poussage des plaques de verre, disposée latéralement par rapport au coussin gazeux, du côté bas, et se déplaçant dans la direction prévue pour le mouvement des plaques de verre.

Le plateau 7 renferme alors des moyens de soufflage non représentés pour permettre la sustentation des plaques de verre.

Lors de certaines phases du procédé, ces moyens de soufflage sont mis hors service et les plaques de verre reposent alors sur la surface 19 du plateau 7.

Quelle que soit la réalisation, convoyeur à rouleaux ou à coussin gazeux, le plateau comporte en outre un ou plusieurs caissons tels que 21, débouchant au travers de la surface 19 dudit plateau par des orifices 22. Ces caissons 21 sont reliés à un système d'aspiration et/ou de mise en pression non représenté.

Le gaz sous pression, en général de l'air, est fourni chaud aux caissons 21 pour éviter de refroidir les plaques de verre portées à haute température en vue de leur bombage et éventuellement de leur trempe ultérieure. Dans le cas de la réalisation avec convoyeur à coussin gazeux, les moyens de soufflage servant à constituer le coussin gazeux peuvent être confondus avec ceux du système de mise en pression éventuellement avec des débits et/ou des pressions réglables différemment.

Avantageusement, la surface 19 du plateau est garnie d'un revêtement réfractaire isolant approprié.

Le plateau 7 est monté pivotant autour de l'axe ou arbre de pivotement 8 et c'est au travers de cet arbre 8 qu'est disposé un canal 23 montré figure 2, au travers duquel chemine la dépression ou la surpression pour alimenter les caissons 21 dudit plateau et également le soufflage pour le coussin gazeux dans le cas de la réalisation avec convoyeur à coussin gazeux.

Avantageusement, cet arbre de pivotement 8 est monté parallèle à la direction des rouleaux 14. Il est solidement claveté dans des alésages 24 pratiqués dans des parties latérales 25 de la pièce 26 constituant la semelle des caissons 21 et du plateau 7. Cet arbre 8 est guidé dans des paliers non représentés situés de part et d'autre et à l'extérieur de la cellule de bombage 3. En bout d'arbre 8, d'un côté est appliqué un système d'entrainement, non représenté, comportant un réducteur accouplé à un moteur à courant continu, commandé par un système électronique assurant une cinématique précise du pivotement avec rampe d'accélération, palier, rampe de décélération. De façon à obtenir des positionnements rigoureux, à la fin des cycles de pivotement du plateau 7, sont prévues des butées d'accostage telle que 27.

Comme indiqué précédemment, dans le cas de la réalisation avec convoyeur à rouleaux, les rouleaux 14 de la portion 5' de convoyeur sont totalement libres lorsqu'ils sont escamotés. Aussi, faut-il assurer leur maintien pendant le pivotement du plateau 7. Le système de verrouillage proposé fait appel à une mécanique simple mettant en oeuvre la gravité et des axes d'articulation à jeu suffisant pour garantir un bon fonctionnement à chaud. Le système de verrouillage comporte deux sous-ensembles identiques 30 disposés symétriquement à l'intérieur de la cellule de bombage 3, chacun d'un côté du plateau pivotant 7. Chaque sous-ensemble 30 est composé comme décrit ci-après. Chaque rouleau 14 est associé, à chacune de ses extrémités avec un taquet de maintien 31 approximativement en forme de crosse en extrêmité haute, apte à venir recouvrir, par sa partie recourbée en crosse, l'extrêmité du rouleaux 14 lorsqu'il est en position de repos escamotée, reposant au fond des gorges 20 du plateau 7. La base de chaque taquet de maintien 31, opposée à sa partie recourbée, est articulée sur un axe fixe 32 disposé latéralement sur la structure ou semelle 26 des caissons 21 et du plateau pivotant 7.

Une bielle de verrouillage 33 relie ensemble tous les taquets de maintien 31 associés aux extrêmités des rouleaux 14 disposées d'un même côté, en étant articulée sur toutes les articulations 34 appartenant à tous les taquets de maintien 31, ces articulations 34 étant situées à distance des autres articulations 32, sensiblement à mi-longueur de chaque taquet de maintien 31.

Les articulations 34 sont décalées vers l'avant, de façon que les taquets de maintien 31 soient constamment inclinés et que le poids de leur tête en forme de crosse sous l'effet de la gravité ait tendance à les faire s'incliner encore plus.

La bielle de verrouillage 33 se termine côté aval ou avant, par une tête de verrouillage 35, l'aval étant déterminé par le sens de progression des plaques de verre dans l'installation, sens repéré par la flèche F sur les figures.

Un plot de déverrouillage 36, monté fixe sur le bati général 37 de la cellule de bombage 3, est prévu pour coopérer avec la tête de verrouillage 35 et la maintenir repoussée en amont, ainsi que la bielle de verrouillage 33 et tous les taquets de maintien 31 qui sont articulés sur elle, lorsque le plateau pivotant 7 est en position horizontale prêt à recevoir sur la portion 5' de convoyeur qu'il porte, une nouvelle plaque de verre 2 venant du four de réchauffage 1. Des loquets, l'un supérieur 38, l'autre inférieur 39, pivotent autour d'axes, respectivement 40 et 41 appartenant à la semelle 26 du plateau pivotant 7, de façon à pourvoir en se rabattant venir par leur extrémité libre recourbée, opposée au point de pivotement, verrouiller la tête de verrouillage 35 et ainsi l'empécher de reculer, ainsi d'ailleurs que la bielle de verrouillage 33 dont sont solidaires tous les taquets de maintien 31. Le loquet supérieur 38 est muni d'un talon 42 qui est destiné à venir prendre appui sur une butée 43 appartenant au bati général 37 de la cellule de bombage 3.

Dans le cas de la réalisation avec convoyeur 5 à coussin gazeux la mise hors service du coussin gazeux est simple puisqu'elle se fait par coupure du débit de gaz alimentant ledit coussin gazeux.

Lors du pivotement du plateau 7 équipé d'une portion 5' de convoyeur à coussin gazeux, il n'y a donc rien à surveiller. Pour faciliter ce pivotement les moyens latéraux d'entrainement des plaques de verre, associés au coussin gazeux sont avantageusement indépendants du plateau pivotant.

L'installation est également équipée de moyens de positionnement et de centrage des plaques de verre à travailler, en particulier sur la portion 5′ de convoyeur portée par le plateau pivotant 7. De tels moyens sont par exemple décrits dans les demandes de brevets en France n° 8615488, 8513801 (publiée sous le n° 2587478).

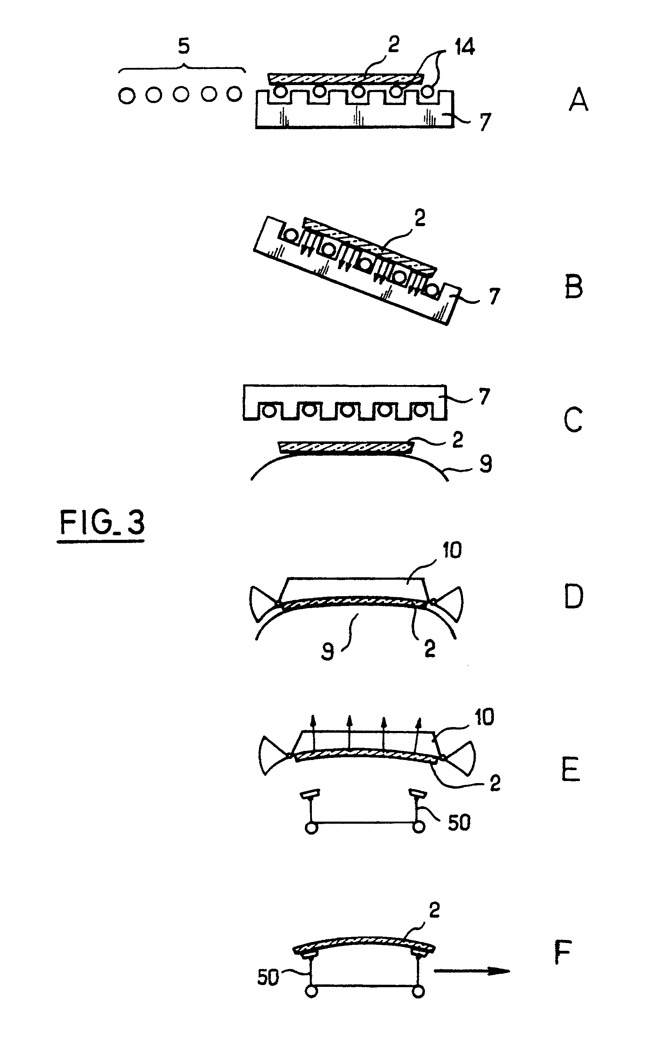

L'installation peut en outre comporter un cadre de transport 50 (montré figure 3) des plaques de verre bombées, destiné à sortir les plaques de verre de la cellule de bombage 3 pour les transférer dans le poste de trempe ou de recuisson 4.

Toutefois, lorsque la forme convexe de bombage 9 est un cadre ouvert en son centre, ce cadre peut être prévu mobile pour pouvoir être transféré au poste de trempe ou de recuisson 4.

Bien entendu, pour favoriser une cadence élevée de fabrication de vitrages bombés trempés ou recuits il est préférable qu'une forme de bombage 9 reste en place dans la cellule de bombage 3, après la sortie d'une plaque de verre bombée vers le poste 4 suivant, de façon à pouvoir recevoir immédiatement la plaque de verre suivante. Dans ce cas on préfère donc prévoir soit au moins un cadre 50 spécialement destiné à la sortie des plaques de verre et au soutien desdites plaques pendant leur trempe ou leur recuisson, soit un renouvellement de la forme concave de bombage 9 qui serait sortie avec la plaque de verre bombée, par une autre forme concave prévue en attente dans la cellule de bombage même, ou dans une enceinte voisine, soit chaude, soit froide, suivant la nature des matériaux constituant ladite forme.

Bien entendu, ainsi qu'il est classique dans la technique, la cellule de bombage 3 est maintenue à température élevée et la sortie ou éventuellement les sorties multiples prévue(s) vers le ou les poste(s) 4 de trempe ou de recuisson est(sont) equipée(s) de fermeture(s) escamotable(s) isolante(s) du type porte(s) à guillotine. La possible contreforme 10 est montée de façon à pouvoir être animée des mouvements nécessaires à sa mise en oeuvre.

Elle peut ainsi être animée d'un mouvement vertical soit pour se rapprocher de la forme convexe et venir presser une plaque de verre, soit pour s'en éloigner. Ce mouvement vertical peut être d'une grande amplitude pour permettre l'arrivée et la sortie des plaques de verre ainsi que le pivotement du plateau 7, ou au contraire il peut s'agir d'un mouvement vertical de faible amplitude destiné à l'approche finale vis à vis de la plaque de verre, le dégagement complet pour permettre l'arrivée ou l'évacuation des plaques de verre ainsi que le pivotement du plateau 7, pouvant avoir lieu suivant une autre direction par exemple horizontale.

Dans le cas de mouvements uniquement verticaux, la contreforme 10 est fixée sur une platine non représentée, à l'extrêmité d'une colonne verticale également non représentée. Cette colonne coulisse verticalement sur une distance importante nécessaire au dégagement complet pour le mouvement des plaques de verre et du plateau pivotant 7.

Dans le cas de mouvements horizontaux, la contreforme 10 est montée sur une platine non représentée, à l'extrêmité d'une poutre horizontale également non représentée. La position de cette poutre peut être transversale par rapport à l'axe longitudinal de l'installation repéré par la flèche F. Cette poutre coulisse par exemple dans un système de guidage qui peut être implanté hors de la cellule de bombage 3 pour permettre le stationnement de la contreforme 10 hors cellule, en dehors de l'atmosphère chaude ; dans ce cas, l'orifice d'introduction de la contreforme 10 dans la cellule de bombage 3 est obturé par une porte suffisamment isolante, par exemple à guillotine.

Le coulissement de la poutre dans le système de guidage est obtenu par un moteur à commande précise par exemple moto-réducteur à courant continu avec rampes d'accélération, décélération, palier, assurant des déplacements rapides et des positionnements rigoureux.

Tout l'ensemble est fixé sur une plateforme non représentée, pouvant le placer en position haute éloignée de la forme convexe 9, ou en position basse précise, avec des passages de l'une à l'autre des positions, en vitesse rapide d'approche, puis en vitesse lente d'accostage, en particulier vers le bas, puisque c'est ce mouvement qui va assurer le pressage des plaques de verre. Le débattement entre position haute et basse est suffisant pour permettre l'entrée et la sortie de l'éventuel cadre 50 spécial de transport ou de la forme convexe elle même.

Des butées réglables qui ne sont pas toutes représentées sur les figures, sont avantageusement prévues pour garantir des positionnements précis.

Les amenées de gaz sous pression et/ou la dépression se font avantageusement au travers soit de la colonne dans le cas d'un mouvement uniquement vertical, soit au travers de la poutre dans le cas d'un mouvement horizontal.

Le poste de trempe ou de recuisson 4 faisant suite à la cellule de bombage 3 est un poste classique. Dans le cas d'un poste de trempe sont prévus comme habituellement, des moyens de soufflage inférieurs 60 et supérieurs 61 entre lesquels sont placées les plaques de verre 2 bombées à tremper, lesdites plaques reposant sur un cadre support, cadre spécial 50 ou forme 9 ayant servi précédemment au bombage.

L'installation a été décrite avec un seul poste de bombage et un seul poste de trempe ou de recuisson 4. Cependant un plateau pivotant 7 unique peut alimenter plusieurs postes de bombage et un poste de bombage unique ou plusieurs postes de bombage peut (peuvent) alimenter plusieurs cadres spéciaux 50 destinés à alimenter à leur tour plusieurs postes de trempe ou de recuisson.

Un train de cadres spéciaux introduits successivement entre la forme convexe 9 et la contreforme 10 peut alors être prévu.

L'installation ainsi décrite fonctionne comme indiqué ci-après.

Des plaques de verre 2 portant éventuellement des motifs d'émail sur leur face supérieure, traversent une à une sur le convoyeur 5 le four de réchauffage 1 dans lequel elles sont amenées à leur température de formage. A la sortie de ce four 1, les plaques de verre pénètrent dans la cellule de bombage 3 maintenue à température élevée, et elles sont prises en charge par la portion 5' de convoyeur appartenant au plateau 7 pivotant autour d'un axe 8, par exemple parallèle à la direction des rouleaux du convoyeur 5 ou perpendiculaire à la direction de défilement des plaques de verre. L'évolution des plaques de verre 2 sur la portion 5' de convoyeur se fait à la même vitesse qu'au travers du four 1 (figure 3A).

Après positionnement, recentrage et arrêt d'une plaque de verre sur la portion 5' de convoyeur, dans le cas de convoyeur à rouleaux, les rouleaux 14 de cette portion 5' sont escamotés par passage au niveau bas de la structure qui porte l'ensemble cinématique agissant sur les galets d'entrainement 16 et de support 17 et 18 des rouleaux 14. Une plaque de verre 2 initialement portée par les rouleaux 14 se retrouve alors en appui sur la surface 19 du plateau pivotant 7 et les rouleaux 14 se retrouvent en position de repos ou escamotée, au fond des gorges 20, à l'arrêt puisque désolidarisés de leur galets d'entrainement. Dans le cas de convoyeur à coussin gazeux, une fois la plaque de verre correctement positionnée, le coussin gazeux est interrompu et la plaque de verre repose alors sur la surface 19 du plateau 7.

La plaque de verre 2 est immobilisée par mise en action de la dépression au travers des orifices 22 de la surface 19.

Le plateau 7 entame alors son pivotement autour de son arbre de pivotement 8 (figure 3B). Dans le cas d'une portion 5' de convoyeur à rouleaux, les opérations s'enchainent comme indiqué ci-après.

Le loquet supérieur 38 voit alors son talon 42 quitter la butée 43, la gravité entrainant la tête dudit loquet 38 vers le bas. L'extrêmité libre recourbée de la tête du loquet 38 s'engage donc derrière la tête de verrouillage 35 terminant la bielle de verrouillage 33, dès que le plateau 7 a suffisamment pivoté et que la bielle de verrouillage 33, libérée de sa butée contre le plot de verrouillage 36, a suffisamment été poussée vers l'avant sous l'effet de la gravité jouant sur l'ensemble des taquets de maintien 31. Les taquets de maintien 31, soumis à la gravité, s'inclinent un peu plus vers l'avant au fur et à mesure que le plateau 7 pivote, verrouillant ainsi par leur extrêmité en crosse, les rouleaux 14 dans leur position de repos au fond des gorges 20. Le plateau 7 poursuit son pivotement. Lorsqu'il a pivoté d'un peu plus de 90°, le loquet inférieur 39, soumis à l'effet de la gravité, enclenche sa tête recourbée derrière la tête de verrouillage 35. Quelques instants après le loquet supérieur 38, sur lequel l'effet de la gravité est un peu retardé par l'effet en sens contraire de la gravité sur son talon 42, déverrouille la tête de verrouillage 35. En outre, aux alentours de la mi-course du plateau dans son pivotement, la gravité agit directement et favorablement sur les taquets de maintien 31.

Pendant toute la suite du pivotement jusqu'à 180° c'est donc le loquet inférieur 39 qui verrouille tout l'ensemble mécanique de façon que les rouleaux 14 restent bloqués au fond des gorges 20. Dans le cas où la partie 5' de convoyeur portée par le plateau 7 est à coussin gazeux, après coupure dudit coussin gazeux et maintien de la plaque de verre par dépression, le plateau 7 pivote.

A la fin du pivotement, le système électronique associé au système d'entrainement du plateau pivotant commande un ralentissement du pivotement, puis son arrêt. Le plateau accoste sur une butée ; il se trouve alors exactement à l'aplomb de la forme convexe de bombage 9 (figure 3C).

La dépression au travers des orifices 22 de la surface 19 du plateau 7 est alors interrompue et avantageusement, une légère surpression est envoyée au travers des orifices 19 (ou au travers d'orifices identiques aux orifices 19, mais distincts). La plaque de verre est ainsi déposée sur la forme convexe 9 (figure 3C).

Le plateau pivotant 7 est renvoyé dans sa position initiale en attente de la plaque de verre suivante. Dans le cas de convoyeur 5 à rouleaux, pendant tout le pivotement en sens inverse, les loquets, successivement inférieur 39 et supérieur 38 verrouillent la tête 35 de la bielle de verrouillage 33 sauf peut être pendant un court instant lorsque le plateau 7 est aux alentours de sa mi-course, mais dans ces instants la gravité agit directement sur les taquets de maintien 31 et sur la bielle de verrouillage 33, si bien que les rouleaux 14 restent de toute façon bloqués au fond des gorges 20. Légèrement au delà de la mi-course le loquet inférieur 39 se déverrouille seul sous l'effet de la gravité, si bien que reste seul verrouillé le loquet supérieur 38. En fin de pivotement du plateau 7 dans son trajet retour, le talon 42 du loquet supérieur 38 vient buter contre la butée 43, ce qui a pour effet, le pivotement se poursuivant, de déverrouiller la tête de verrouillage 35.

Aussitôt après, la tête de verrouillage 35 rencontre le plot de déverrouillage 36, ce qui entraine au fur et à mesure que le pivotement se poursuit, la poussée de la bielle de verrouillage 33 et le retrait des taquets de maintien 31, si bien que les rouleaux 14 sont libérés. Le plateau 7 s'arrête ensuite sur une butée 27. Les rouleaux 14 sont remontés en position active, par passage au niveau haut de la structure qui porte l'ensemble cinématique agissant sur les galets d'entrainement 16 et de support 17 et 18 des rouleaux 14.

Pendant ce temps, la plaque de verre déposée sur déposée sur la forme convexe a pu sous le simple effet de la gravité s'affaisser sur cette forme et en épouser le profil. Eventuellement une dépression au travers ou à la périphérie de la forme convexe a aidé à l'affaissement.

Cette forme convexe 9 portant la plaque de verre bombée est alors sortie de la cellule de bombage 3 et transférée au poste suivant de trempe ou de recuisson. Dans la mesure où il s'agit d'un poste de trempe, la forme 9 est avantageusement un cadre ouvert en son centre pour favoriser le passage de l'air de trempe.

Pour certains profils à obtenir, le simple affaissement éventuellement aidé par une dépression est insuffisant et dans ce cas des moyens complémentaires de pressage sont mis en oeuvre. Dans la mesure où il s'agit de moyens pneumatiques, après action de ces moyens, la forme 9 elle-même, comme dans le cas précédent, est transférée en même temps que la plaque de verre bombée, au poste de travail suivant. Dans la mesure où il s'agit de moyens de pressage mécaniques, la contreforme 10 est amenée au contact du verre posé sur la forme convexe 9 et vient le forcer à épouser le profil de ladite forme 9 (figure 3D).

La contreforme 10 est ensuite relevée. Suivant les cas :

— elle est éloignée seule laissant la plaque de verre bombée sur la forme convexe 9 et ladite forme convexe est sortie de la cellule de bombage 3 et transférée au poste suivant, de trempe ou de recuisson,

— ou elle est éloignée en emportant avec elle la plaque de verre. Pour ce faire, une dépression s'exerce au travers de la contreforme 10 (figure 3E), et/ou à sa périphérie. Cette dépression au travers de la contreforme 10 peut-être aidée par une pression au travers de la forme de bombage convexe 9.

La contreforme 10 et la plaque de verre sont soulevées suffisamment pour permettre l'entrée d'un cadre spécial 50 de transport sur lequel la plaque de verre est déposée et c'est ce cadre spécial 50 qui sort la plaque de verre bombée de la cellule de bombage 3 et la transfère au poste suivant, de trempe ou de recuisson (figure 3F). Au moment du lacher de la plaque de verre par la contreforme 10, une légère surpression peut avantageusement être appliquée.

L'enroulement de la plaque de verre à bomber sur une forme convexe est préférable à l'affaissement sur une forme concave. Le contrôle du bombage au centre de la plaque de verre, qui est un des points délicats lorsqu'on utilise un cadre de bombage concave, est ici dans le cas d'une forme convexe, beaucoup mieux appréhendé.

En effet, il se produit un certain effet de voûte qui fait que, même en cas de température excessive du verre ou en cas de temps trop long d'affaissement, notamment pendant le transfert au poste de travail suivant, il n'y a pas de courbure excessive au centre.

En outre, dans le cas d'emploi d'un cadre spécial de transport 50, même si un léger affaissement parasite apparaissait pendant le transfert au poste de travail suivant, on pourrait prévoir alors une forme de bombage convexe 9, n'ayant pas exactement le profil final désiré pour les vitrages, mais un profil corrigé de façon à compenser par avance l'affaissement parasite.

Ainsi donc, grâce à l'invention il devient possible de répondre à la demande des constructeurs automobiles qui réclament des vitrages bombés ayant un double bombage nul, c'est à dire un excès de bombage au centre, qui soit nul.

L'invention permet ainsi de fabriquer des vitrages bombés pour lesquels les tolérances de bombage sont beaucoup plus serrées qu'en faisant appel aux techniques de l'art antérieur.

L'invention est en outre aussi très avantageuse pour la fabrication de vitrages courbés bombés émaillés sur leur face concave. En effet, les plaques de verre arrivent alors dans l'installation de bombage avec, sur leur face supérieure, un revêtement qui est encore fragile, et même presque liquide et ce revêtement émaillé est préservé de tout contact avec un élément de l'installation, au moins au début du processus de bombage, ce qui est suffisant pour lui permettre de se solidifier et de devenir résistant. En effet, la plaque de verre ayant son revêtement en face supérieure, est retournée en étant uniquement maintenue par la dépression s'exerçant sur sa face inférieure.

Ensuite, le contact de l'émail peut se faire contre la forme convexe 7 sans dégât puisque ledit émail a eu le temps de se solidifier. Et même encore dans certaines variantes du procédé, la forme de bombage convexe 9 étant un cadre, il est possible de prévoir de ne faire reposer la plaque de verre sur le cadre, en y appuyant que ses portions exemptes d'émail, il suffit pour cela de prévoir la position des zones d'appui du cadre dans les zones du vitrage exemptes d'émail.

Grâce à l'emploi d'un convoyeur 5 à coussin gazeux, on peut même traiter sans dommage des plaques de verre émaillées sur leur face inférieure, cette face inférieure, préservée de tout contact conserve intact l'émail qu'elle porte. Cette face inférieure deviendra ensuite après bombage la face convexe.

En fin de bombage, l'émail en face convexe supérieure, pourra entrer en contact avec la contreforme 10, sans être endommagé, puisqu'il aura eu le temps de durcir, ou même encore, l'emploi de la contreforme n'est pas indispensable, soit que le simple affaissement suffise, soit qu'on ait recours au pressage pneumatique.

En outre, une plaque de verre traitée dans une telle installation de bombage avec coussin gazeux peut comporter des revêtements d'émail sur ses deux faces, l'un et l'autre pouvant rester intacts.

Donc on constate que ce procédé autorise le bombage de verres émaillés sur l'une et/ou l'autre face.

Bien entendu un système de retournement des plaques de verre tel que décrit précédemment peut aussi être utilisé pour transférer des plaques de verre d'un convoyeur à rouleaux ou autre, notamment à coussin gazeux, à un dispositif autre qu'un forme convexe. En particulier il peut s'agir d'une forme concave à la place de la forme convexe. De la même façon des plaques de verre amenées sur un convoyeur, à rouleaux ou autre et notamment à coussin gazeux, en particulier si l'on ne veut pas dégrader l'émail déposé en face inférieure des plaques de verre, peuvent être transférées sur une forme de bombage convexe, sans qu'il soit nécessaire de les retourner. On peut utiliser pour les transférer, par exemple un dispositif de préhension du type de celui décrit dans FR 2085464 ou dans EP 3391.

## Revendications

1. Procédé de bombage de plaques de verre (2) portées à haute température et arrivant à plat sur un convoyeur (5), **caractérisé en ce que** chaque plaque de verre (2) est saisie, retournée par un plateau pivotant (7) la retenant grâce à une dépression agissant sur la face inférieure de la plaque de verre, de manière à amener cette face inférieure en position supérieure, puis chaque plaque de verre est déposée sur une forme de bombage (9) dont elle épouse le profil.

2. Procédé selon la revendication 1, **caractérisé en ce que** la forme de bombage (9) est à convexité tournée vers le haut.

3. Procédé selon une des revendications 1 ou 2, **caractérisé en ce que** la plaque de verre (2) épouse le profil de la forme de bombage (9) sous l'effet de l'un des moyens pris seul ou en combinaison appartenant au groupe suivant : affaissement sous l'effet de la gravité, pressage mécanique par une contreforme supérieure, pressage pneumatique par un courant d'air chaud descendant.

4. Procédé selon la revendication 3, **caractérisé en ce que** l'affaissement sous l'effet de la gravité est aidé par une dépression s'exerçant au travers de la forme de bombage (9) et/ou à sa périphérie.

5. Procédé selon l'une des revendications précédentes, **caractérisé en ce qu**'en fin de bombage, la plaque de verre est transférée au poste de travail suivant, poste de trempe ou poste de recuisson, selon l'un des moyens appartenant au groupe suivant : transfert au poste suivant de la forme de bombage portant la plaque de verre bombée, transfert de la plaque de verre bombée de la forme de bombage sur un cadre spécialement destiné au transport et sortie de ce cadre chargé de la plaque de verre bombée de la zone de bombage pour entrer au poste suivant.

6. Procédé selon la revendication 5, **caractérisé en ce que** dans le cas de l'utilisation d'un cadre spécialement destiné au transport, le profil de la forme de bombage diffère du profil à donner aux plaques de verre de façon à compenser par avance l'affaissement parasite desdites plaques de verre sur ce cadre specialement destiné au transport.

7. Procédé selon l'une des revendications 3 à 6 précédentes, **caractérisé en ce** qu'après le pressage mécanique de la plaque de verre (2) par une contreforme (10), ladite contreforme est écartée de la forme de bombage (9) en soulevant en même temps la plaque de verre (2) notamment par dépression de façon à permettre l'introduction sous ladite plaque de verre d'un cadre (50) spécialement destiné à la sortie de la plaque de verre bombée.

8. Procédé selon la revendication 7, **caractérisé en ce que** la dépression au niveau de la contreforme (10) s'exerce au travers de ladite contreforme et/ou à sa périphérie.

9. Procédé selon l'une des revendications 7 ou 8, **caractérisé en ce que** la dépression au niveau de la contreforme (10) est complété par la pression s'exerçant au travers de la forme de bombage.

10. Procédé selon l'une des revendications 7 à 9, **caractérisé en ce qu**'une surpression est appliquée au travers de la contreforme (10) et/ou du plateau pivotant (7) au moment où la plaque de verre est abandonnée par ladite contreforme (10) ou ledit plateau (7).

11. Procédé selon l'une des revendications précédentes, **caractérisé** en ce **que** le retournement de la plaque de verre à bomber s'effectue autour d'un axe perpendiculaire à la direction d'arrivée de ladite plaque de verre sur le convoyeur.

12. Procédé selon l'une des revendications précédentes, **caractérisé en ce que** la forme de bombage (9) est un anneau à profil courbe ou une forme pleine.

13. Dispositif de bombage de plaques de verre portées à haute température et arrivant à plat sur un convoyeur (5), **caractérisé** en ce qu'il comporte à l'intérieur d'une cellule de bombage (3) :
   * un plateau (7) équipé de moyens de transport (5') escamotables notamment une portion de convoyeur à rouleaux (14), ou pouvant être mis hors service notamment un convoyeur à coussin gazeux, aptes à recevoir les plaques de verre à la suite du convoyeur (5) les amenant, équipé également de moyens de maintien par dépression des plaques de verre, apte à pivoter pour retourner les plaques maintenues de façon à amener la face initialement inférieure de ces plaques en position supérieure,

* une forme de bombage (9), disposée sous le plateau (7) après qu'il ait pivoté, de façon que ledit plateau (7) abandonnant la plaque de verre qu'il maintient, celle-ci se retrouve sur ladite forme de bombage (9).

14. Dispositif de bombage selon la revendication 13, **caractérisé en ce que** la forme de bombage est à convexité tournée vers le haut.

15. Dispositif selon l'une des revendications 13 ou 14, **caractérisé en ce qu'**il comporte en outre, des moyens de pressage des plaques de verre sur la forme de bombage (9) constitués par l'un des moyens appartenant au groupe suivant : moyens de pressage pneumatiques émettant un flux gazeux chaud vertical dirigé de haut en bas, moyens de pressage mécanique comprenant une contreforme (10) de profil complémentaire de celui de la forme de bombage (9) apte à venir s'appliquer sur une plaque de verre reposant sur ladite forme (9).

16. Dispositif de bombage selon la revendication 15, **caractérisé en ce que** la contreforme (10) comprend une partie centrale (10a) sur laquelle sont articulées des parties latérales (10b, 10c) aptes à s'escamoter sous l'effet de vérins pour permettre l'approche et/ou le retrait de la contreforme (10) vis-à-vis de la forme (9).

17. Dispositif selon l'une des revendications 13 à 16, **caractérisé en ce que** la contreforme (10) est percée d'orifices au travers desquels peut s'exercer une dépression, une surpression.

18. Dispositif selon l'une des revendications 13 à 17, **caractérisé en ce que** le plateau (7) présente une surface (19) dans laquelle sont ménagées des gorges parallèles (20) aptes à loger, lorsqu'ils sont en position escamotée, les rouleaux (14) appartenant aux moyens de transport (5') **et en ce que** les portions de surface (19) entre les gorges (20) sont percées d'orifices au travers desquels, selon les phases du bombage, est appliquée la dépression ou la surpression.

19. Dispositif selon la revendication 18, **caractérisé en ce que** sont prévus des moyens de verrouillage des rouleaux (14) des moyens de transport (5') en position escamotée au fond des gorges (20) lorsque le plateau (7) pivote, ces moyens de verrouillage comportant une pluralité de taquets de maintien (31) dont l'extrémité recourbée en crosse vient s'engager au-dessus de chaque rouleau (14) sous l'effet de la gravité, ces taquets de maintien (31) étant montés debout, inclinés vers le rouleau à verrouiller, articulés par leur extrémité opposée à la crosse sur un axe fixe (32), reliés en eux par une bielle de verrouillage (33) qui s'articule sur eux sensiblement au milieu de leur longueur, cette bielle de verrouillage étant en butée contre un plot de déverrouillage fixe (36) pour retenir les taquets de maintien (31) en position non active lorsque le plateau (7) est en position de réception d'une plaque de verre à la suite du convoyeur (5), cette bielle (33) s'éloignant par contre du plot (36) lorsque le plateau (7) pivote, laissant ainsi les taquets de maintien (31) sous l'effet de la gravité, verrouiller les rouleaux (14), des loquets de verrouillage (33) en position avancée correspondant au verrouillage, pendant le pivotement quel que soit l'effet de la gravité sur les taquets de maintien (31).

20. Dispositif de bombage selon l'une des revendications 13 à 19, **caractérisé en ce qu'**il possède un cadre spécial de transport (50) destiné à recevoir les plaques de verre après bombage pour les transférer au poste de travail suivant notamment le poste de trempe ou de recuisson, ce cadre (50) étant en particulier un anneau à profil courbe éventuellement équipé de barrettes transversales ou longitudinales complémentaires, monté déplaçable.

21. Dispositif selon l'une des revendications 13 à 20, **caractérisé en ce que** la forme de bombage (9) est équipée de moyens aptes à créer soit une dépression, soit une pression positive à son niveau.

22. Procédé de bombage selon la revendication 2, **caractérisé en ce que** l'on opère un dépôt d'émail non solide sur la face supérieure de la plaque de verre et que le temps de traitement de la plaque de verre est suffisant pour permettre la solidification de l'émail déposée en face concave de la plaque de verre avant le dépôt de ladite plaque sur la forme de bombage à convexité tournée vers le haut.

23. Procédé de bombage selon la revendication 2, **caractérisé en ce qu'**on opère un dépôt d'émail non solide sur la face inférieure de la plaque de verre, qui est amenée jusqu'au poste de bombage et positionnée sur le plateau pivotant au moyen d'un convoyeur à coussin gazeux.

**Patentansprüche**

1. Verfahren zum Biegen von Glastafeln (2), die auf eine hohe Temperatur erhitzt sind und liegend auf einer Fördereinrichtung (5) ankommen, dadurch gekennzeichnet, daß jede Glastafel (2) gegriffen und von einer Schwenkplatte (7), von der sie durch einen auf die Unterseite der Glastafel wirkenden Unterdruck gehalten wird, gewendet wird, dergestalt, daß diese Unterseite nach oben geführt wird, wonach jede Glastafel auf eine Biegeform (9) gelegt wird, deren Profil sie sich anpaßt.

2. Verfahren nach Anspruch 1, dadurch gekennzeichnet, daß die Biegeform (9) nach oben konvex ist.

3. Verfahren nach einem der Ansprüche 1 bis 2, dadurch gekennzeichnet, daß die Glastafel (2) sich dem Profil der Biegeform (9) anpaßt unter der Einwirkung eines der folgenden Mittel, einzeln oder kombiniert angewandt : Absacken unter Einwirkung der Schwerkraft, mechanisches Pressen durch eine obere Gegenform, pneumatisches Pressen durch einen absteigenden Warmluftstrom.

4. Verfahren nach Anspruch 3, dadurch gekenn-

19     EP 0 299 869 B1     20

zeichnet, daß das Absacken unter Einwirkung der Schwerkraft durch einen durch die Biegeform hindurch oder auf ihrem Umfang wirkenden Unterdruck unterstützt wird.

5. Verfahren nach einem der vorhergehenden Ansprüche, dadurch gekennzeichnet, daß am Ende des Biegevorganges die Glastafel zur nächsten Arbeitsstation gebracht wird, zur Abschreck- oder Abkühlstation, durch eines der folgenden Mittel : Transport der die gebogene Glastafel tragenden Biegeform zur nächsten Arbeitsstation, Transport der gebogenen Glastafel von der Biegeform auf einen speziell für den Transport bestimmten Rahmen und Austritt des mit der gebogenen Glastafel beladenen Rahmens aus der Biegezone, um in die nächste Station einzutreten.

6. Verfahren nach Anspruch 5, dadurch gekennzeichnet, daß im Fall der Verwendung eines speziell für den Transport bestimmten Rahmens sich das Profil der Biegeform von dem den Glastafeln zu gebenden Profil insofern unterscheidet, daß im voraus das Absacken der Glastafeln auf diesem speziell für den Transport bestimmten Rahmen ausgeglichen wird.

7. Verfahren nach einem der vorhergehenden Ansprüche 3 bis 6, dadurch gekennzeichnet, daß nach dem mechanischen Pressen der Glastafel (2) durch eine Gegenform (10) die Gegenform von der Biegeform (9) getrennt wird, wobei gleichzeitig die Glastafel (2) angehoben wird, insbesondere durch Unterdruck, dergestalt, daß unter die Glastafel ein speziell für den Austritt der gebogenen Glastafel bestimmter Rahmen (50) eingeführt werden kann.

8. Verfahren nach Anspruch 7, dadurch gekennzeichnet, daß der Unterdruck in Höhe der Gegenform (10) durch die Gegenform hindurch und/oder auf ihrem Umfang ausgeübt wird.

9. Verfahren nach einem der Ansprüche 7 oder 8, dadurch gekennzeichnet, daß der Unterdruck in Höhe der Gegenform (10) durch den durch die Biegeform hindurch wirkenden Druck ergänzt wird.

10. Verfahren nach einem der Ansprüche 7 bis 9, dadurch gekennzeichnet, daß ein Überdruck durch die Gegenform (10) hindurch und/oder die Schwenkplatte (7) hindurch in dem Moment ausgeübt wird, in dem die Glastafel von der Gegenform (10) oder der Schwenkplatte (7) abgegeben wird.

11. Verfahren nach einem der vorhergehenden Ansprüche, dadurch gekennzeichnet, daß das Wenden der zu biegenden Glastafel um eine Achse herum stattfindet, die senkrecht zur Zuförderrichtung der Glastafel auf der Fördereinrichtung steht.

12. Verfahren nach einem der vorhergehenden Ansprüche, dadurch gekennzeichnet, daß die Biegeform (9) ein Ring mit bogenförmigem Profil oder eine Vollform ist.

13. Vorrichtung zum Biegen von Glasplatten, die auf eine hohe Temperatur erhitzt sind und liegend auf einer Fördereinrichtung ankommen, dadurch gekennzeichnet, daß sie im Inneren einer einer Biegestation (3) folgendes enthält :

— eine Platte (7), ausgerüstet mit versenkbaren Transportmitteln (5'), insbesondere ein Abschnitt der Fördereinrichtung mit Rollen (14), oder mit abschaltbaren Transportmitteln (5'), insbesondere eine Gaskissen-Fördereinrichtung, wobei diese Transportmittel die Glastafeln hinter der Fördereinrichtung (5), die die Tafeln heranführt, aufnehmen, wobei die Platte (7) ferner mit einer Einrichtung zum Halten der Glastafeln durch Unterdruck ausgerüstet und schwenkbar ist, um die gehaltenen Tafeln zu wenden, dergestalt, daß die ursprünglich untenliegende Seite dieser Tafeln nach oben zu liegen kommt,

— eine Biegeform (9), die nach dem Schwenken der Platte (7) unter dieser angeordnet ist, derart, daß, wenn die Platte (7) die Glastafel, die sie festhält, abgibt, die sich auf der Biegeform (9) befindet.

14. Vorrichtung zum Biegen nach Anspruch 13, dadurch gekennzeichnet, daß die Biegeform nach oben konvex ist.

15. Vorrichtung nach einem der Ansprüche 13 oder 14, dadurch gekennzeichnet, daß sie außerdem eine Einrichtung zum Pressen der Glastafeln auf die Biegeform (9) aufweist, nämlich eine pneumatische Einrichtung zum Pressen, die einen vertikalen, von oben nach unten gerichteten heißen Gasstrom abgibt, eine mechanische Presseinrichtung, umfassend eine Gegenform (10) mit einem zu dem Profil der Biegeform (9) komplementären Profil, die dazu bestimmt ist, in Anlage auf eine auf der Form (9) liegende Glastafel zu gelangen.

16. Vorrichtung zum Biegen nach Anspruch 15, dadurch gekennzeichnet, daß die Gegenform (10) einen Mittelteil (10a) umfaßt, auf dem Seitenteile (10b, 10c) gelenkig angebracht sind, die unter der Wirkung von Hubvorrichtungen eingefahren werden können, um die Annäherung und/oder das Zurückziehen der Gegenform (10) gegenüber der Form (9) zu ermöglichen.

17. Vorrichtung nach einem der Ansprüche 13 bis 16, dadurch gekennzeichnet, daß die Gegenform (10) mit Bohrungen versehen ist, durch die hindurch ein Unterdruck oder ein Überdruck wirken kann.

18. Vorrichtung nach einem der Ansprüche 13 bis 17, dadurch gekennzeichnet, daß die Platte (7) eine Oberfläche aufweist, in der parallele Rillen (20) zur Aufnahme der zu den Transportmitteln (5') gehörenden Rollen in deren abgesenkter Position angeordnet sind, und daß die zwischen den Rillen (20) liegenden Teile der Oberfläche (19) mit Bohrungen versehen sind, durch die, je nach den Phasen der Biegung der Unterdruck oder der Überdruck ausgeübt wird.

19. Vorrichtung nach Anspruch 18, dadurch gekennzeichnet, daß eine Verriegelungseinrichtung für die beim Schwenken der Platte (7) in abgesenkter

11

Lage am Boden der Rillen (20) befindlichen Rollen (14) der Transportmittel (5') vorgesehen ist, welche eine Anzahl von Halteklampen (31) enthalten, deren bogenförmig gekrümmtes Ende unter der Wirkung der Schwerkraft über jede Rolle (14) fällt, wobei diese Halteklampen (31) stehend angebracht sind, gegen die zu verriegelnde Rolle geneigt sind, an ihrem dem Bogen entgegengesetzten Ende auf einer festen Achse (32) gelenkig angeordnet sind, untereinander durch einen Verriegelungslenker (33) verbunden sind, der an ihnen im wesentlichen in der Mitte ihrer Länge angelenkt ist, wobei dieser Verriegelungslenker sich im Anschlag an einem feststehenden Entriegelungsteil (36) befindet, der die Halteklampen (31) in nicht aktiver Lage hält, wenn die Platte (7) sich in Aufnahmeposition für eine Glastafel von der Fördereinrichtung (5) befindet, wobei der Lenker (33) sich von dem Entriegelungsteil (36) entfernt, wenn die Platte (7) schwenkt, so daß die Halteklampen (31) unter der Wirkung der Schwerkraft die Rollen (14) verriegeln und daß Verriegelungshaken (33) vorgesehen sind, die sich in vorgerückter Position in Verriegelungsstellung während des Schwenkens befinden, wie auch immer die Wirkung der Schwerkraft auf die Halteklampen (31) ist.

20. Vorrichtung zum Biegen nach einem der Ansprüche 13 bis 19, dadurch gekennzeichnet, daß sie einen speziellen Transportrahmen (50) besitzt, der dazu bestimmt ist, die Glastafeln nach dem Biegen aufzunehmen, um sie der nächsten Arbeitsstation zuzuführen, insbesondere der Abschreckstation oder der Abkühlstation, wobei dieser Rahmen im besonderen ein Ring mit gekrümmtem Profil ist, der gegebenenfalls mit transversal oder longitudinal verlaufenden komplementären Stegen versehen ist und der verschiebbar angebracht ist.

21. Vorrichtung nach einem der Ansprüche 13 bis 20, dadurch gekennzeichnet, daß die Biegeform (9) mit Mitteln ausgerüstet ist, die sich dazu eignen, entweder einen Unterdruck oder einen positiven Druck in Höhe der Biegeform zu erzeugen.

22. Verfahren zum Biegen nach Anspruch 2, dadurch gekennzeichnet, daß man eine nicht feste Emailleschicht auf die Oberseite der Glastafel aufbringt und daß die Bearbeitungszeit der Glastafel ausreicht, um das Festwerden der auf der konkaven Seite der Glastafel aufgebrachten Emailleschicht zu ermöglichen, bevor die Tafel auf die Biegeform mit nach oben gerichteter Biegung gelegt wird.

23. Verfahren zum Biegen nach Anspruch 2, dadurch gekennzeichnet, daß man eine nicht feste Emailleschicht auf die Unterseite der Glastafel aufbringt, die bis zur Biegestation transportiert wird und auf der ausschwenkenden Platte positioniert wird mittels eines Gaskissen-Fördermittels.

## Claims

1. Process for cambering glass plates (2) brought to a high temperature and arriving flat on a conveyor (5), characterized in that each glass plate (2) is grasped, turned over by a pivoting plate member (7), which holds the same due to a vacuum acting on the lower face of the glass plate, so as to bring said lower face into the upper position and then each glass plate is deposited on a cambering mould (9), whose profile it adopts.

2. Process according to claim 1, characterized in that the cambering mould (9) has an upwardly turned convexity.

3. Process according to one of the claims 1 or 2, characterized in that the glass plate (2) adopts the profile of the cambering mould (9) under the effect of one of the means taken singly or in combination belonging to the following group : sagging under the effect of gravity, mechanical pressing by an upper countermould and pneumatic pressing by a rising hot air current.

4. Process according to claim 3, characterized in that sagging under the effect of gravity is aided by a vacuum exerted through the cambering mould (9) and/or at its periphery.

5. Process according to one of the preceding claims, characterized in that at the end of cambering, the glass plate is transferred to the following working station, namely the tempering or annealing station, in accordance with one of the means belonging to the following group : transfer to the following station of the cambering mould carrying the cambered glass plate, transfer of the cambered glass plate from the cambering mould to a frame especially intended for the conveying and discharge of the said frame carrying the cambered glass plate from the cambering zone in order to enter the following station.

6. Process according to claim 5, characterized in that in the case of using a frame specially designed for conveying, the profile of the cambering mould differs from the profile to be given to the glass plates, so as to compensate in advance the parasitic sagging of said glass plates on the said frame specially designed for conveying.

7. Process according to any one of the claims 3 to 6, characterized in that following the mechanical pressing of the glass plate (2) by a countermould (10), the latter is moved away from the cambering mould (9) by at the same time raising the glass plate (2), particularly by a vacuum, so as to permit the introduction beneath the said glass plate of a frame (50) specially intended for the discharge of the cambered glass plate.

8. Process according to claim 7, characterized in that the vacuum level with the countermould (10) is exerted through the said countermould and/or at its periphery.

9. Process according to one of the claims 7 or 8, characterized in that the vacuum at the countermould (10) is completed by the pressure exerted through the cambering mould.

10. Process according to one of the claims 7 to 9, characterized in that an overpressure is applied through the countermould (10) and/or the pivoting plate member (7) at the time when the glass plate is released by the said countermould (10) or the said plate member (7).

11. Process according to any one of the preceding claims, characterized in that the turning over of the glass plate to be cambered takes place around an axis perpendicular to the arrival direction of said glass plate on the conveyor.

12. Process according to any one of the preceding claims, characterized in that the cambering mould (9) is a solid shape or curved profile ring.

13. Apparatus for cambering glass plates brought to a high temperature and arriving flat on a conveyor (5), characterized in that within a cambering cell (3) it comprises a plate member (7) equipped with retractable conveying means (5') and in particular a roller conveyor portion (14), or which can be placed out of service and in particular a gas cushion conveyor able to receive the glass plates following the conveyor (5) supplying them and which is also equipped with means for holding the glass plates by vacuum, able to pivot so as to turn over the held plates so as to bring the initially lower face of said plates into the upper position and a cambering mould (9) positioned beneath the plate member (7) following the pivoting thereof, so that said plate member (7) releases the glass plate held by it and the glass plate is then located on the cambering mould (9).

14. Cambering apparatus according to claim 13, characterized in that the cambering mould has an upwardly turned convexity.

15. Apparatus according to one of the claims 13 or 14, characterized in that it also comprises means for pressing the glass plates on the cambering mould (9) and constituted by one of the means belonging to the following group : pneumatic pressing means discharging a tap to bottom, vertical hot gas flow, mechanical means comprising a countermould (10) having a complimentary profile to that of the cambering mould (9) and which can be applied to a glass plate resting on the said mould (9).

16. Cambering apparatus according to claim 15, characterized in that the countermould (10) has a central portion (10a), to which are articulated the lateral portions (10b, 10c) able to retract under the effect of jacks to permit the approach and/or retreat of the countermould (10) with respect to the mould (9).

17. Apparatus according to any one of the claims 13 to 16, characterized in that the countermould (10) has orifices through which can be exerted a vacuum/overpressure.

18. Apparatus according to any one of the claims 13 to 17, characterized in that the plate member (7) has a surface (19) in which are provided parallel grooves (20) for housing, when they are in the retracted position, the rollers (14) belonging to the conveying means (5') and in that the surface portions (19) between the grooves (20) have orifices through which, as a function of the phases of the cambering operation, is applied the vacuum or overpressure.

19. Apparatus according to claim 18, characterized in that means are provided for locking the rollers (14) of the conveying means (5') in the retracted position at the bottom of the grooves (20) when the plate member (7) pivots, said locking means comprising a plurality of holding brackets (31), whose end curved in crook-like manner is engaged over each roller (14) under the action of gravity, said holding brackets (31) being fitted upright, inclined towards the roller to be locked, articulated by their end opposite to the crook on a fixed spindle (32), interconnected by a locking rod (33), which is articulated thereon substantially in the centre of their length, said locking rod abutting against a fixed unlocking stud (36) in order to hold the holding brackets (31) in an inactive position when the plate member (7) is in the reception position for a glass plate at the end of the conveyor (5), said rod (33) moving away with respect to the stud (36) when the plate member (7) pivots, thus leaving the holding brackets (31) under the effect of gravity, locking the rollers (14) of the locking means (33) in the advanced position corresponding to locking during the pivoting operation and no matter what the effect of gravity on the holding brackets (31).

20. Cambering apparatus according to any one of the claims 13 to 19, characterized in that it has a special conveying frame (50) for receiving the glass plates after cambering, in order to transfer them to the following working station and in particular the tempering or annealing station, said frame (50) being in particular a curved profile ring, optionally provided with displaceably fitted, complimentary longitudinal or transverse strips.

21. Apparatus according to any one of the claims 13 to 20, characterized in that the cambering mould (9) is equipped with means able to create either a vacuum, or a positive pressure at its level.

22. Cambering process according to claim 2, characterized in that a non-solid enamel deposit is made on the upper face of the glass plate and that the treatment time of the glass plate is sufficient to enable the solidification of the enamel deposited on the concave face of the glass plate prior to the deposition of said plate on the cambering mould having an upwardly turned convexity.

23. Cambering process according to claim 2, characterized in that a nonsolid enamel deposit is made on the lower face of the glass plate, which is brought to the cambering station and positioned on the pivoting plate member by means of a gas cushion conveyor.

# FIG_1

EP 0 299 869 B1

FIG.2

EP 0 299 869 B1

FIG. 3